# EUROPEAN PATENT APPLICATION

(11) **EP 3 945 074 A1**
(43) Date of publication of application: **02.02.2022**
(21) Application number: 20188785.8
(22) Date of filing: 30.07.2020
(51) Int. Cl.: C02F 1/52, C02F 1/66, C08F 6/16, C08F 6/24

(54) **PROCESS TO REDUCE THE CONCENTRATION OF FLUOROORGANIC ACIDIC COMPOUND IN AQUEOUS DISPERSIONS**

(71) Applicant: 3M Innovative Properties Company, Saint Paul, MN 55133-3427 (US)
(72) Inventor: HINTZER, Klaus, 84556 Kastl (DE); DADALAS, Michael, 84489 Burghausen (DE); HUBER, Stefan, 84180 Loiching (DE); KRUPP, Valentina, 84478 Waldkraiburg (DE); ZHANG, Zhongxing, Woodbury, MN 55125 (US)
(74) Representative: Hettstedt, Stephan

(57) **Abstract**

The present disclosure provides a process for removing fluoroorganic acidic compounds from a dispersion of fluoroorganic polymer particles in at least one protic solvent, the process comprising the following steps:
(i) forming a mixture of
a. a dispersion having a pH-value of less than 6 and comprising fluoroorganic polymer particles, at least one protic solvent and at least one fluoroorganic compound with
b. an extraction composition comprising at least one alkylamine;

(ii) reacting the fluoroorganic acidic compound with the alkylamine to form a hydrophobic ionic compound comprising the anion of the fluoroorganic acidic compound and the cation of the alkyl amine;
(iii) separating the mixture into a first phase comprising the at least one protic solvent, the fluoroorganic polymer particles and no greater than 50% by weight of the total amount of the at least one fluoroorganic compound initially present in the dispersion in step (i); and a second phase comprising the hydrophobic ionic compound; and
(iv) removing the first phase from the second phase.

## Description

### Field

The present disclosure relates to a process for removing fluoroorganic acidic compounds from dispersions of fluoroorganic polymer particles by reacting the acidic compounds with an alkyl amine to form a hydrophobic ionic compound.

### Background

Fluorinated compositions have been used in a wide variety of applications including fluorochemicals for: water-proofing materials, fire-fighting foams for electrical and grease fires, semi-conductor etching, and lubricants; and fluoropolymers for: hoses, gaskets, seals, coatings, and films. Reasons for such widespread use of fluorinated compositions include their favorable physical properties, which include chemical inertness, low coefficients of friction, low polarizabilities (i.e., fluorophilicity), and thermo stability

After production of a fluorinated composition, fluorinated compounds, including, for example, starting materials, emulsifiers, adjuvants and reaction by-products, may be removed from the desired product. The removal of the fluorinated compounds may be to recover expensive starting material and/or to avoid undesirable release of the fluorinated compounds into the environment.

Processes to remove or recover fluorinated compounds include ion exchange, ultrafiltration, distillation, liquid-liquid extraction, reverse osmosis, and adsorption on clays, carbon and other media. Such processes have been described in U.S. Publ. Nos. 2006/0205828 (Maurer et al.), 2007/0025902 (Hintzer et al), and 2010/0084343 (Mader et al.), and U.S. Pat. Nos. 3,882,153 (Seki et al), 4,369,266 (Kuhls, et al.), 6,642,415 (Fuhrer et al), 7,279,522 (Dadalas et al), and 5,603,812 (Hommeltoft). It is known that these processes may be associated with deficiencies of various degrees, such as low efficiency, high investment costs, or an increased environmental burden. Another more recent effort comprised the removal of fluoroorganic acids from aqueous media with alkylammonium compounds. However, the removal of fluoroorganic compounds in the presence of polymer particles remains still a desire in the art.

Accordingly, there exists a desire in the art to provide cost-efficient, effective and environmentally benign for removal of fluorinated acidic compounds in the presence of polymer particles from liquid media such as aqueous media. In particular, there exists a need for efficient methods and processes of removing fluorinated organic acidic compounds from dispersions of polymer particles such as fluorinated polymer particles.

### Summary

The present disclosure provides a process for removing fluoroorganic acidic compounds from a dispersion of fluoroorganic polymer particles in at least one protic solvent, the process comprising the following steps:
(i) forming a mixture of
   a. a dispersion having a pH-value of less than 6 and comprising fluoroorganic polymer particles, at least one protic solvent and at least one fluoroorganic compound with
   b. an extraction composition comprising at least one alkylamine;
(ii) reacting the fluoroorganic acidic compound with the alkylamine to form a hydrophobic ionic compound comprising the anion of the fluoroorganic acidic compound and the cation of the alkyl amine;
(iii) separating the mixture into a first phase comprising the at least one protic solvent, the fluoroorganic polymer particles and no greater than 50% by weight of the total amount of the at least one fluoroorganic compound initially present in the dispersion in step (i); and a second phase comprising the hydrophobic ionic compound; and
(iv) removing the first phase from the second phase.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. It should be noted, however, that the use of "comprising" herein also encompasses the term of "consisting of", i.e. the use of "consisting of" in the sense of "consisting only of" is not excluded in the present disclosure per se.

Amounts of ingredients of a composition may be indicated by % by weight (or "% wt". or "wt.-%") unless specified otherwise. The amounts of all ingredients gives 100 % wt unless specified otherwise. If the amounts of ingredients are identified by % mole the amount of all ingredients gives 100% mole unless specified otherwise.

Unless explicitly indicated, all preferred ranges and embodiments may be combined freely.

Parameters as described herein may be determined as described in detail in the experimental section.

The present disclosure provides a process for removing fluoroorganic acidic compounds from a dispersion of fluoroorganic polymer particles in at least one protic solvent, the process comprising the following steps:
(i) forming a mixture of
   a. a dispersion having a pH-value of less than 6 and comprising fluoroorganic polymer particles, at least one protic solvent and at least one fluoroorganic compound with
   b. an extraction composition comprising at least one alkylamine;
(ii) reacting the fluoroorganic acidic compound with the alkylamine to form a hydrophobic ionic compound comprising the anion of the fluoroorganic acidic compound and the cation of the alkyl amine;
(iii) separating the mixture into a first phase comprising the at least one protic solvent, the fluoroorganic polymer particles and no greater than 50% by weight of the total amount of the at least one fluoroorganic compound initially present in the dispersion in step (i); and a second phase comprising the hydrophobic ionic compound; and
(iv) removing the first phase from the second phase.

With this process according to the present disclosure, an efficient removal of the fluoroorganic acidic compounds from aqueous polymer latices and dispersions comprising polymer particles becomes feasible. While in some instances it may be desirable to remove the polymer particles, it is generally desirable to remove fluoroorganic acidic compounds from polymer dispersions without an agglomeration or coagulation of the polymer particles. With the process according to the present disclosure, i.e. a process following steps (i) to (iv) as described herein which comprises contacting the fluoropolymer particle dispersion with at least one alkylamine at pH-values of less than 6, it becomes possible to remove fluoroorganic acidic compounds from these emulsion without any undesired agglomeration of particles. The process according to the present disclosure is particularly advantageous for the removal of fluorinated compounds in the presence of colloidal stabilized polymer particles from aqueous dispersions, which are very difficult to remove from water streams with the methods previously known in the art. In this regard, it is believed that the fluoroorganic acidic compound reacts with the at least one alkylamine to form a hydrophobic ionic compound comprising the fluoroorganic acidic anion and the alkylammonium. This hydrophobic ionic compound then readily separates from the protic solvent of the dispersion such as to form a second phase different from the first (protic solvent) phase. Accordingly, when separating the first (protic) phase from the second phase, an effective removal of a major part of the fluoroorganic acidic compounds initially present in the dispersion a. is achieved by the process according to the present disclosure.

Thus, in step (i) of the process according to the present disclosure, a mixture is formed of the dispersion a. and the extraction composition b. Forming a mixture includes providing dispersion a. and extraction composition b., bring both a. and b. into contact with each other, and may further include mixing, stirring, agitating or other steps well-known to the skilled person to form a mixture from two liquid components.

In step (ii), the reaction between the alkylamine and the fluoroorganic acidic compound takes place, in which the hydrophobic ionic compound is formed. In this regard, "reacting" includes "allowing to react", which means the case when both components get into contact, the reaction automatically takes place.

Further, in step (iii) of the process according to the present disclosure, the mixture is separated into a first phase comprising the at least one protic solvent, the fluoroorganic polymer particles and no greater than 50 wt.-% of the total amount of the fluoroorganic acidic compound initially present in the emulsion a. in step (i). Given the hydrophobic nature of the ionic compound formed in step (ii), a separation of the mixture in the two phases as described herein may readily take place once mixing as described herein is stopped. This may include transfer of the mixture as described herein into another vessel or compartment where no mixing or mixing step is being carried out. In general, and as known in the art, phase separation into the two phases as described herein may already be visible even upon inspection with the naked eye. However, determination and verification of phase separation may additionally carried out by means well-established in the art. Preferably, the major part of total amount of the at least one fluoroorganic compound as described herein is at least 60 wt.-%, preferably at least 65 wt.-%, and more preferably at least 70 wt.-% of the total amount of fluoroorganic acidic compound initially present in the dispersion in step (i). The major part as described herein may even be greater, such as at least 80 wt.-% or even at least 90 wt.-%, based on the total amount of fluoroorganic acidic compound initially present in the dispersion in step (i).

Next, the first phase is removed from the second phase in step (iv). Removing the second phase from the first phase in step (iv) may be then carried out by any common means known in the art to the skilled person. Preferably, those means and methods will be selected which are suitable for continuous and/or large-scale operations.

The term "protic solvent" has the meaning commonly used in the art and describes a solvent whose molecules can either donate at least one proton to other molecules. Protic solvents are generally known to the skilled person and may either be selected according to the present needs of the process and the solubility of the fluoroorganic acidic compound. However, it may also occur that the protic solvent is already part of or even constitutes the major part of a media and, therefore, cannot be selected. The at least one first protic solvent may be selected from water, at least one alcohol, at least one acid, and any combinations and mixtures thereof. This has the advantage that a good phase separation between the first phase and the second phase in step (ii) of the process according to the present disclosure may be obtained, which is generally very desirable for a good separation of the two phases in subsequent step (iv) and/or the time it takes to complete step (iii). In this regard, the at least one alcohol may be selected from methanol, ethanol, propanol, butanol, pentanol, hexanol, and any combinations and mixtures thereof. The acid may be selected from organic acids such as formic acid and acetic acid and from inorganic acids such as H₂SO₄, HCl or HNO₃. or HF. In this regard, solutions or dilutions of these acids in water are preferably employed in the process as described herein. The water content of such acid-containing phases may be, for example, less than 90 wt.-%, less than 70 wt.-%, or even less than 20 wt.-%, based on the total weight of the dispersion. On the other hand, the content of the alcohols can be high up to 20 wt.-%, up to 5 wt.-%, or up to 1 wt.-%, based on the total weight of the dispersion.

With regard to the dispersion comprising the at least one fluoroorganic compound in at least one protic solvent, it is preferred that the dispersion further comprises at least one surfactant. This has the effect that the dispersion is stabilized, i.e. no agglomeration of particles occurs under normal circumstances. Such dispersions are known as "stabilized dispersions" to the skilled person. The at least one surfactant may be selected from ionic surfactants and non-ionic surfactants, and any combinations and mixtures thereof. Non-ionic surfactants and ionic surfactants useful for the process as described herein are well-known to the skilled person and are readily commercially available. For instance, non-ionic surfactants are available under the trade designations "Tergitol", "Gernapol" and the like. As an example for anionic surfactants, lauric acid may be named. In order to achieve the desired stabilization effect for the dispersions as described herein, it is preferred that the at least one surfactant is contained in the dispersion in an amount of at least 0.001 wt.-%, preferably at least 0.003 wt.-%, and more preferably at least 0.005 wt.-%, based on the total weight of the dispersion. It is further preferred that the at least one surfactant is contained in the dispersion in an amount of up to 25 wt.-%, preferably of up to 20 wt.-%, more preferably of up to 15 wt.-%, based on the total weight of the dispersion. Higher amounts are neither necessary and are thus to be avoided from both an ecologic as economic point of view. Preferably, the at least one surfactant is contained in the dispersion in an amount in the range of from 0.001 to 25 wt.-%, preferably from 0.003 to 20 wt.-%, and more preferably from 0.005 to 15 wt.-%, based on the total weight of the dispersion.

The coating compositions according to the present disclosure preferably contain non-fluorinated non-ionic surfactants. Typically, they contain these surfactants in an amount of from about 1 to 6 wt.-% weight based on the total weight of the composition, or from 2 to 12 wt.-% based on the weight of fluoropolymer in the dispersion. The surfactants are nonaromatic. Suitable surfactants include those of the general formula (I):

R1O-[CH₂CH₂O]ₙ-[R2O]m-R3 (I)

wherein R1 represents a linear or branched aliphatic hydrocarbon group having at least 8 carbon atoms, preferably 8 to 18 carbon atoms. In formula (I) above R2 represents an alkylene having 3 carbon atoms, R3 represents hydrogen or a C1-C3 alkyl group, n has a value of 0 to 40, m has a value of 0 to 40 and the sum of n+m is at least 1 and preferably n is at least 1. In a preferred embodiment, residue R1 corresponds to (R')(R")HC- wherein R' and R" are the same or different, linear, branched or cyclic alkyl residues, R3 is H, and m is 0. Such embodiment includes branched secondary alcohol ethoxylates. Commercially available non-ionic surfactant or mixtures of non-ionic surfactants include those available from Clariant GmbH under the trade designation GENAPOL such as GENAPOL X-080 and GENAPOL PF 40. Branched secondary alcohol ethoxylates are commercially available under the trade designation TERGTIOL TMN from Dow Chemical Company, e.g. Tergitol TMN 6, Tergitol TMN 100X and Tergitol TMN 10 from Dow Chemical Company.

Another suitable class of non-ionic non-fluorinated emulsifiers include ethoxylated amines and amine oxides. Further non-fluorinated, non-ionic surfactants that can be used include alkoxylated acetylenic diols, for example ethoxylated acetylenic diols. The ethoxylated acetylenic diols for use in this embodiment preferably have a HLB between 11 and 16. Commercially available ethoxylated acetylenic diols that may be used include those available under the 15 / 30 trade designation SURFYNOL from Air Products, Allentown, PA (for example, SURFYNOL 465). Still further useful non-ionic surfactants include polysiloxane based surfactants such as those available under the trade designation Silwet L77 (Crompton Corp., Middlebury, CT).

Other examples of non-ionic surfactants include sugar-based surfactants, such as alkylpolyglycosides and the like. Sugar-based surfactants contain one or more cyclic aliphatic polyols and comprise one or more linear or branched alky chain residue that may optionally be interrupted by oxygen atoms (ether atoms). The linear or branched residues typically include alkyl, alkoxy or polyoxy alkyl residues and may contain at least 6 carbon atoms or at least 8 carbon atoms and typically between 6 to 26 or 8 to 16 carbon atoms. A preferred type of sugar-based emulsifiers includes alkyl glucosides. Alkyl glucosides contain at least one glucose moiety. Alkyl poly glucosides are available, for example, by acid 16 / 30 catalysed reaction of glucose, starch or n-butyl glucosides with fatty alcohols which typically yields a mixture of various alkyl glucosides (Alkylpolygylcoside, Römpp, Lexikon Chemie, Version 2.0, Stuttgart/New York, Georg Thieme Verlag, 1999). Examples of fatty alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid and combinations thereof. Alkyl glucosides are also commercially available under the trade designation Glucopon from Cognis GmbH, Düsseldorf, Germany. Another class of non-ionic surfactants includes polysorbates. Polysorbates include ethoxylated, propoxylated or alkoxylated sorbitans and may further contain linear cyclic or branched alkyl residues, such as but not limited to fatty alcohol or fatty acid residues. Useful polysorbates include those available under the trade designation Polysorbate 20, Polysorbate 40, Polysorbate 60 and Polysorbate 80. Polysorbate 20, is a laurate ester of sorbitol and its anhydrides having approximately twenty moles of ethylene oxide for each mole of sorbitol and sorbitol anhydrides. Polysorbate 40 is a palmitate ester of sorbitol and its anhydrides having approximately twenty moles of ethylene oxide for each mole of sorbitol and sorbitol anhydrides. Polysorbate 60 is a mixture of stearate and palmitate esters of sorbitol and its anhydrides having approximately twenty moles of ethylene oxide for each mole of sorbitol and sorbitol anhydrides. While the fluoropolymers provided herein already have good or improved shear stability and film forming properties such properties of the aqueous dispersions containing them may be further improved by the non-ionic emulsifiers employed. The dispersion properties may be optimized for shear stability and/or film forming properties by choosing the type of non-ionic emulsifier and if desired combination of non-ionic and ionic emulsifiers. Typical amounts of non-ionic emulsifiers include 1 to 12 wt.-% based on the weight of fluoropolymer in the dispersion or from 1 to 6 wt.-% based on the total weight of the dispersion.

The at least one fluoroorganic acidic compound may be selected from aliphatic linear, branched or aromatic fluorinated acidic compounds. In this regard, the fluorinated acids may be selected from fluorinated acids comprising a carbon backbone of at least 2 carbon atoms, preferably of at least 3 carbon atoms, for example, at least 5 carbon atoms, wherein the carbon backbone optionally contains at least one oxygen backbone. The fluorinated acids may be selected from fluorinated acids comprising a carbon backbone of 40 carbon atoms or less, preferably of 35 carbon atoms or less, and more preferably of 30 carbon atoms or less. It is particularly preferred that the fluorinated acids are selected from fluorinated acids comprising a carbon backbone of from 3 to 40 carbon atoms, preferably from 4 to 35 carbon atoms, and more preferably from 5 to 30 carbon atoms. The at least one fluorinated acidic compound may comprise at least one carboxylic acid moiety, at least one sulfonic acid moiety, at least one sulfate moiety, and/or at least one alcohol moiety. As known to the skilled person, fluorinated alcohols are acidic and fall under the definition of fluorinated acidic compounds as used herein and may therefore be advantageously removed by the process according to the present disclosure. The fluorinated acids comprise carboxylic acids (R_{f}-SO₃H, sulfates R_{f}-CH₂-O-SO₃⁻), or alcohols (R_{f}-CH₂OH).

The acids/alcohols can be perfluorinated or partially fluorinated. Examples are e.g.

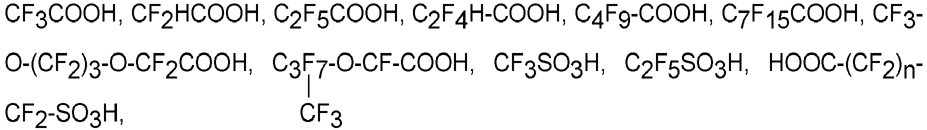

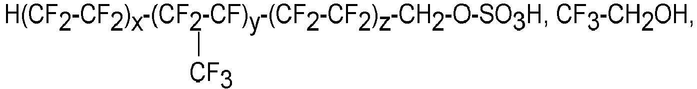

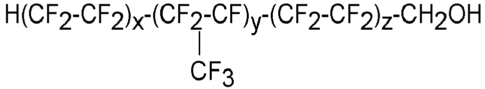

In particular, some fluoroorganic compounds as described herein are known as PFCA's (perfluorinated carboxylic acids). Thus, removal of present commercially available fluoroorganic compounds become feasible with the process according to the present disclosure. In this regard, the fluoroorganic compounds are fluorinated or perfluorinated C2 to C40 carboxylic acids.

In particular, it is preferred that the fluoroorganic compounds are selected from fluoroorganic compounds such as highly fluorinated emulsifiers. In this regard, the term "highly fluorinated" has the meaning as commonly used in the art, i.e. organic compounds where most of the hydrogen atoms are replaced with fluorine atoms. Fluoroorganic emulsifiers are often present in water streams containing also fluorinated polymer particles. Hence, the present disclosure provides for an efficient, economically and ecologically advantageous removal of compounds from aqueous media, for instance wastewater from industrial production sites. For instance, fluoroorganic compounds which may be particulary advantageously removed by the process as described herein are known to the skilled person as PFAS, such as ADONA, Gen X, PFOA, PFOS and the like.

Typically, the fluoroorganic compounds are present in the dispersion in an amount of from 0.4 ppb to 3,000 ppm. Such emulsifiers are often selected from R_{f} 0-L-COO⁻X⁺ as described in, for example, US 2016/0362508 A1, US 2017/037166 A1 or US 2007/0276103 A1 and may be linear or branched as disclosed in, for example, EP 313175 B1.

The present process is also removing efficiently undesired side products from known polymerisation processes during manufacture of fluorinated or perfluorinated polymers. Such compounds are perfluorinated or partially fluorinated from C₂ to C₂₀ and may be generated by side reactions of comonomers (e. g. vinylethers), terminations by initiators or chain transfer agents.

The polymeric fluoroorganic particles as used in the process as described herein are not limited inasmuch they are able to form dispersions in protic solvents. Accordingly, this applies to many polymeric fluoroorganic particles used in many industrial processes. Preferably, wherein the polymeric fluoroorganic particles are polymeric particles selected from PFA, ETFE, FEP, PTFE and THV, and any combinations thereof.

The amount of polymer particles in the latex or dispersion is determined often by the solid content of the dispersion/latex. The solid content range may be in the range of from 0.02 to 80 wt.-%%, preferably 0.04 to 70 wt.-%, and more preferably from 0.06 to 60 wt.-%, based on the total weight of the dispersion. The dispersion can be a water stream from work-up processes containing a single polymer or a variety of different fluoropolymers; usually these streams have a low solid content, e.g. less than 5 w%. Alternatively, high solid dispersions can be treated with the trialkyl-amines. In all cases, the fluorinated compounds can be removed from the water/organic phase. For example, the average particle sizes (d₅₀) of the polymers may be in the range of from 20 nm to 500 nm, preferably from 50 to 300 nm.

With regard to the at least one alkylamine used in the processes according to the present disclosure, it is preferred that the at least one alkylamine is selected from primary, secondary and/or tertiary alkylamines, preferably from tertiary alkylamines. Preferably, the at least one alkylamine comprises linear or branched alkyl groups comprising at least 3 carbon atoms, preferably at least 4 carbon atoms, and more preferably at least 5 carbon atoms. It is also preferred that the at least one alkylamine comprises linear or branched alkyl groups comprising up to 25 carbon atoms, preferably up to 20 carbon atoms, and more preferably up to 18 carbon atoms. Accordingly, it is preferred that the at least one alkylamine comprises linear or branched alkyl groups comprising from 3 to 25 carbon atoms, preferably from 4 to 20 carbon atoms, and more preferably from 5 to 18 carbon atoms. With the at least one alkylamine having carbon atoms in the preferred ranges as described herein, a particularly efficient removal of the fluoroorganic compounds from the dispersion of the fluorinated polymer particles as described herein may be achieved.

The amines of the present disclosure may be a liquid or a solid at room temperature. In one embodiment, the amine useful in the present disclose may be described as a water insoluble amine having a solubility in water of less than 20 mg, 10 mg, 5 mg, 3 mg, 2 mg, 1 mg, 0.75 mg, 0.5 mg, or even less than 0.25 mg per 100 mL when measured at ambient conditions.

Preferably, the at least one alkylamine is an amine according to an amine of formula (II):

NR₁R₂R₃ (II)

wherein R₁, R₂, and R₃ may be the same or different and at least one of R₁, R₂, and R₃ is a linear or branched, saturated or unsaturated carbon group, which optionally, may comprise heteroatoms, and optionally, wherein one or two of R₁ to R₃ may be a H. Preferably, any one of R₁, R₂ and R₃ comprise at least 3 carbon atoms, preferably at least 4 carbon atoms, and more preferably at least 5 carbon atoms. For example, the number of carbons in R₁-R₃ can vary, including, for example carbon backbones comprising least 5, 6, 7, 8, 10, 12, 14, 16, 20, or even 24 carbon atoms. Preferably, the at least one alkylamine as used herein is selected from trihexylamine, trioctylamine, tridecylamine, tridocecylamine, alamine, triisooctylamine, trioctyl-decylamine, N-methyldioctylamine, N,N-dimethyloctylamine, tributylamine, octylamine, dioctylamine, and any combinations and mixtures thereof. High purity tertiary amines advantageous for use in the process according to the present disclosure are commercially available, for example, from Cognis, Monheim, Germany under the following trade designations: "ALAMINE 300" (tri-n-octylamine), "ALAMINE 308" (tri-isoctylamine), "ALAMINE 336" (tri(C₈/C₁₀) amine), "ALAMINE 310" (tri-isodecylamine), and "ALAMINE 304" (tri-laurylamine).

The temperature of the mixture, i.e. the dispersion after addition of the at least one alkylamine, may be controlled in order to advantageously enhance the removal of the fluoroorganic acidic compounds in the process as described herein. In this regard, it is preferred that the process is conducted at a temperature of less than 80 °C, preferably less than 70 °C, more preferably of less than 60 °C. Preferably, the process is conducted at a temperature in the range of from 3 °C to 80 °C, preferably from 5 °C to 70 °C, more preferably from 10 to 60 °C, even more preferred from 15 to 50 °C. In particular, the process as described herein is preferably carried out at room temperature and general ambient conditions. This is very advantageous for carrying out the process on an industrial scale since neither cooling nor heating is required, which greatly helps to save on energy, equipment and resources and makes the process as described herein very advantageous from both economic and ecologic point of view.

It is further preferred that the at least one alkylamine is present in at least one organic solvent. This has the advantage that the extraction of the at least one fluoroorganic compound may be sped up. In this regard, it is preferred that the at least one organic solvent is not miscible with water. This has the effect that a clear separation between an aqueous phase and an organic phase may be obtained. Preferably, the at least one organic solvent has a solubility in water at a temperature of 20 °C according to the method of the "Prufmethoden-Verordnung (EG) Nr. 440/2008, Teil A, Methode A.6 (Test according to OECD-Prüfrichtlinie 105), preferably less than 500 ppm and more preferably less than 50 ppm. Furthermore, it is preferred that the at least one organic solvent exhibits a boiling point of at least 100 °C, preferably of at least 125 °C, and more preferably of at least 150 °C. The use of organic solvents exhibiting boiling points at ambient pressure above the aforementioned temperatures, i.e. high-boiling organic solvents, has the advantage of an improved inherent process safety in that the risk of solvent evaporating or even boiling off at the preferred temperatures of the process as described herein is greatly reduced. Preferably, the at least one organic solvent is selected from linear hydrocarbons, cyclic hydrocarbons, ethers, aromatic solvents, and any combinations and mixtures therefrom. As an alternative or in addition to the beforementioned solvents, it is preferred to use fluorinated solvents, e.g. HFE's, Novec-Fluids (available from 3M). Such solvents preferably comprise perfluorinated trialkylamines (NR₃) and/or fluorinated ethers (e.g. Methoxyperfluorobutene HFE 7100). It is preferred that the boiling point of fluorinated solvents is higher than 50 °C. The non-fluorinated solvent should have no functional group, e.g. ester, ketone. Furthermore, it is preferred that the volume ratio of solvent to amine is from 1 : 1 to 1000 : 1. In this regard, it is also preferred that the molar ratio of amine to fluorinated acid/alcohol is at least 1 : 1 up to 1000 : 1, preferably from 1 : 2 up to 100 : 1. These solvents may also be halogenated such as chlorinated or fluorinated, which is advantageous in extracting the fluorinated or perfluorinated compounds in the process according to the present disclosure. In this regard, it is preferred that the at least one organic solvent is selected from toluene, xylene, mesitylene, octane, and any combinations and mixtures or halogenated derivates therefrom.

Contacting the emulsion as described herein with the at least one alkylamine, preferably present in at least one organic solvent as described herein, may be carried out by adding the at least one alkylamine to or into the dispersion. After addition, it is preferred that the resulting mixture is agitated for at least the amount of time sufficient to contact the at least one alkylamine with the fluoroorganic compound present in the first phase. As a general rule, however, the contact time between the organoonium and the first phase is typically in excess of 0.1 seconds with some equipment, but generally less than 5, 4, 3, or even 2 hours. Exemplary equipment that may be used for agitation include: vortexers, agitators, sonicators, and other such equipment as known in the art.

Without wanting to be bound by theory, it is believed that the extraction of the fluoroorganic compounds, in particular acids, from the protic, preferably aqueous phase of the dispersion with alkylamines as described herein, is effectuated with the fluoroorganic acid and the alkylamine forming an ion pair hydrophobic organic liquid. This would then separate from the protic phase and allow separation from the protic phase for further extraction and treatment. This separation is even enhanced when using at least one organic solvent as described herein when the protic dispersion is contacted with the at least one alkylamine in the process according to the present disclosure. Because of this immiscibility, the protic phase (such as the aqueous phase) and non-aqueous phase (or organic phase) generally separate after agitation has stopped. If, however, the mixture, although bi-phasic, does not phase separate on its own, measures as known in the art, may be used to promote the phase separation, including centrifugation. Separation of the organic phase from the aqueous phase may be carried out by any appropriate means known in the art, including, preferably, phase separation.

The process according to the present disclosure may be carried out in a continuous mode. This is very advantageous for applications in industrial scale, where e.g. continuous treatment of wastewater is necessary. For example, the process as described herein may be carried out in extraction columns, preferably multi-staged extraction columns. In this regard, it is preferred that multi-staged extraction columns as known in the art comprise at least two stages. Also, the process may be carried out in Scheibel-columns, centrifugal extractors (e.g. from Robatel), and other means known to the skilled person in the art.

It was further found that the processes according to the present disclosure show best results when carried out at certain pH-values. In particular, it was found that the best results were obtained at low pH-values, while medium pH-values showed only mediocre results and high pH-values failed to achieve effective removal of fluoroorganic compounds. Running the process as described herein at the preferred pH-values may be easily achieved by adjusting the pH-value of the aqueous phase before contacting it with the at least one alkylamine. Accordingly, it is preferred that the pH-value of the first solution is adjusted to a pH-value of up to 5, preferably of up to 4, more preferably of up to 3 before contacting with at least one alkylamine in step (i). Also, this regeneration process is done as continuous, multistage process.

In order to run a process in the chemical industry in an economically efficient way and in order to comply with environmental benign requirements, there is a desire in the art to recollect and, in if feasible, recycle or reuse the material and compounds used in the process. In the process according to the present disclosure, it is desirable to at least recollect the at least one alkylamine used in the process. It was found that this may be achieved by adding at least one base to the organic phase after carrying out the previously described process steps. Hence, it is preferred that the process according to the present disclosure comprises an additional step (v) of adding at least one base to the organic phase in order to regenerate the at least one alkylamine. Carrying out this additional step has the advantage that the at least one alkylamine is regenerated from its protonated form and can be recollected and/or recycled into the processes as described herein. Therefore, it is preferred that step (v) is carried out continuously. It is further preferred that the regenerated at least one alkylamine is recycled into use in step (i) of the process as described herein. Adding a base and recollecting the regenerated alkylamine may be carried out by common means known to the skilled person. With regard to the base, it is preferred that the at least one based is selected from KOH, NH₄OH, NaOH, and any combinations and mixtures thereof. These bases provide favourable results, dissolve readily in aqueous media, and are commercially available in any given amounts at reasonable prices.

The process according to the present disclosure is preferably a continuous process for extracting fluoroorganic compounds from a solvent stream, preferably a wastewater stream. The water stream is preferably selected from an industry wastewater stream, a manufacturing wastewater stream, or a water stream from a vessel comprising a solvent phase containing at least one fluoroorganic compound.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

### NMR Analytical methods:

### (1) Water Phase Samples:

For each sample, an aliquot of fluid was accurately weighed into a 5 mm o.d. glass NMR tube, was spiked with small accurately weighed amount of 2,2,2-trifluoroethanol internal standard, and was diluted with a small amount of deuterium oxide (D₂O) for NMR analyses. 600 MHz ¹H-NMR and 565 MHz ¹⁹F-NMR spectra were acquired. The trifluoroethanol was used in all cases as the internal standard to permit the calculation of the absolute weight percent concentrations of sample components without needing to identity and quantify all of the other components in the samples.

### (2) Organic Phase Samples:

For each sample, an aliquot of fluid was accurately weighed into a 5 mm o.d. glass NMR tube, was spiked with small accurately weighed amount of 1,4-bis(trifluoromethyl)benzene (p-HFX) internal standard, and was diluted with a small amount of deuterium acetonitrile (CD₃CN) for NMR analyses. 600 MHz ¹H-NMR and 565 MHz ¹⁹F-NMR spectra were acquired. The p-HFX was used in all cases as the internal standard to permit the calculation of the absolute weight percent concentrations of sample components without needing to identity and quantify all of the other components in the samples.

### Gas Chromatography Analysis

1 mL of the aqueous sample and 0.6 mL of BF₃/MeOH-complex solution (20%, obtained from Merck) are filled in 10 mL head-space vial and intermediately closed. After shaking, the vial is heated to 70 °C for 30 min using the autosampler unit of the headspace GC-instrument and afterwards analyzed by headspace-GC-FID with external calibration.

### Liquid Chromatography - mass spectrometrie (LC-MS):

The submitted samples were dissolved in methanol prior to analysis. Standard solutions were prepared from an aqueous solution of Adona that was determined to have a concentration of 28.36% by NMR.

| | |
|---|---|
| Instrument: | Agilent 6470 Triple Quad LCMS MAID 1665 |
| Column: | Zorbax Bonus RP, 4.6 x 75 mm, 3.5 µm |
| Solvent A: | Water with 6 mM ammonium acetate |
| Solvent B: | Methanol with 6 mM ammonium acetate |
| Gradient: | 75% B to 100% B at 4 minutes |
| Injection: | 2 µL |
| Col. Temp: | 40°C |
| Flow Rate: | 0.5 mL/min |
| MS: | Negative electrospray |

### Materials used:

| | |
|---|---|
| Trioctylamine | obtained from Sigma Aldrich (99,7% purity) |
| Trifluoroacetic acid | Obtained from Sigma Aldrich (97% purity) |
| Pentafluoropropionic acid | Obtained from Sigma Aldrich (97% purity) |
| Alamine 336 | Obtained from Cognis (>95% purity) |
| Mesitylene | Obtained from Sigma Aldrich (98% purity) |
| Octane | Obtained from Sigma Aldrich (98% purity) |
| KOH (Potassium hydroxide) | Obtained from Sigma Aldrich (>85% purity) |
| ADONA | Emulsifier, chemical formula CF3O-(CF2)3-O-CHF-CF2-COONH4, available from Anles Ltd., St. Petersburg, Russia |
| AOPA | emulsifier, chemical formula CF3-O-(CF2)2-COONH4, prepared as described in US 6,482,979 A1 |

### Example 1

50 ml of an aqueous dispersion containing 50 wt.-% per-fluorinated particles (PFA dispersion with pH value of 2.1), 101 ppm ADONA and 5 m/m% nonionic-surfactant (Genapol X080) is filled in a 250 mL glas bottle. In the next step, 10ml of extracting agent solution (0.25 mL trioctylamine dissolved in 4.75 mL mesitylene) are added. After stirring the solution for 2 h, the mixture was filled in a separation funnel for phase splitting. After extraction, no agglomeration within the aqueous dispersion was observed. After extraction, the ADONA level in the dispersion is reduced to 67 ppm (corresponding to a 33.7% reduction).

### Example 2

75 ml of a PFA-dispersion (melting point 309 °C, MFI (372 °C/5 kg) 14.8 g/10 min) was given to a shaking hopper. This dispersion included 6 wt.-% of Genapol X080 surfactant, calculated on solids and showed a solid content of 30.0 wt.-% and a pH of 3. Into this dispersion 25 ml of a mixture of toluene and Trioctylamine in a ratio of 9:1 (m/m) was given. This mixture was shaken manually and stored for 24 h. After that, a separation into two phases of dispersion and the mixture of Toluene/Trioctylamine had taken place.
The measurement of ADONA showed a value of 3100 ppm of the starting PFA dispersion. After the described procedure, the ADONA content in the aqueous phase was reduced to 200 ppm.

### Example 3

75 ml of the similar PFA-dispersion as described in example 2 (initial ADONA content 3100 ppm) was treated with 25 ml of Trioctylamine. After separation of the phases, the aqueous phase showed a remaining ADONA content of 1200 ppm.

## Claims

1. A process for removing fluoroorganic acidic compounds from a dispersion of fluoroorganic polymer particles in at least one protic solvent, the process comprising the following steps:
(i) forming a mixture of
a. a dispersion having a pH-value of less than 6 and comprising fluoroorganic polymer particles, at least one protic solvent and at least one fluoroorganic compound with
b. an extraction composition comprising at least one alkylamine;
(ii) reacting the fluoroorganic acidic compound with the alkylamine to form a hydrophobic ionic compound comprising the anion of the fluoroorganic acidic compound and the cation of the alkyl amine;
(iii) separating the mixture into a first phase comprising the at least one protic solvent, the fluoroorganic polymer particles and no greater than 50% by weight of the total amount of the at least one fluoroorganic compound initially present in the dispersion in step (i); and a second phase comprising the hydrophobic ionic compound; and
(iv) removing the first phase from the second phase.

2. The process according to claim 1, wherein the dispersion comprising the fluoroorganic polymer particles and the at least one protic solvent further comprises at least one surfactant, preferably selected from ionic surfactants and non-ionic surfactants, and any combinations and mixtures thereof.

3. The process according to claim 1 or claim 2, wherein the fluoroorganic polymer particles are contained in the dispersion in an amount of at least 0.01 wt.-%, preferably of at least 0.05 wt.-%, more preferably of at least 0.08 wt.-%, based on the total weight of the dispersion.

4. The process according to any one of the preceding claims, wherein the at least one fluoroorganic acidic compound is selected from aliphatic linear, branched or aromatic fluorinated acidic compounds, selected from fluorinated acids comprising a carbon backbone of 40 carbon atoms or less, preferably of 35 carbon atoms or less, and more preferably of 30 carbon atoms or less.

5. The process according to claim 4, wherein the at least one fluorinated acidic compound comprises at least one carboxylic acid moiety, at least one sulfonic acid moiety, at least one sulfate moiety, and/or at least one alcohol moiety.

6. The process according to any one of the preceding claims, wherein the at least one alkylamine is selected from primary, secondary and/or tertiary alkylamines, preferably from tertiary alkylamines.

7. The process according to any one of the preceding claims, wherein the at least one alkylamine is an amine according to an amine of formula (II):
NR₁R₂R₃ (II)
wherein R₁, R₂, and R₃ may be the same or different and at least one of R₁,
R₂, and R₃ is a linear or branched, saturated or unsaturated carbon group, which optionally, may comprise heteroatoms, and optionally, wherein one or two of R₁-R₃ may be a H.

8. The process according to any one of the preceding claims, wherein the fluoroorganic compounds are present in the aqueous phase in an amount of from 0.4 ppb to 30000 ppm.

9. The process according to any one of the preceding claims, wherein in step (i), the at least one alkylamine is present in at least one organic solvent.

10. The process according to claim 9, wherein the at least one organic solvent has a solubility in water at 20 °C of less than 0.1 %, preferably less than 500 ppm and more preferably less than 50 ppm.

11. The process according to any one of the preceding claims, wherein the at least one first protic solvent is selected from water and at least one alcohol and any combinations and mixtures thereof.

12. The process according to any one of the preceding claims, wherein the process is carried out in a continuous mode and/or multistage mode.

13. The process according to any one of the preceding claims, wherein the pH-value of the dispersion a. is adjusted to less than 5, preferably less than 4, more preferably less than 3 before contacting with the extraction composition b. in step (i).

14. The process according to any one of the preceding claims, wherein the polymeric fluorinated particles are polymeric particles selected from PFA, ETFE, FEP, PTFE, THV, and any combinations and mixtures thereof.

15. The process according to any one of the preceding claims, wherein the process comprises an additional step (v) of adding at least one base to the second phase in order to regenerate the at least one alkylamine.
